# DEMANDE DE BREVET EUROPEEN

(11) **EP 4 438 404 A1**
(43) Date de publication de la demande: **02.10.2024**
(21) Numéro de dépôt: 24161576.4
(22) Date de dépôt: 05.03.2024
(51) Int. Cl.: B60N 2/809, B60N 2/894, B60N 2/829

(54) **APPUI-TÊTE DE SIÈGE DE VÉHICULE AUTOMOBILE**

(30) Priorité: 23.03.2023 FR 2302723; 30.05.2023 FR 2305358
(71) Demandeur: TESCA France, 92977 Paris La Défense Cedex (FR)
(72) Inventeur: GEORGES, Laurent, 92977 Paris La Défense Cedex (FR); DELUS, Christian, 92977 Paris La Défense Cedex (FR); LEFEVRE, Steve, 92977 Paris La Défense Cedex (FR)
(74) Mandataire: Sayettat, Julien Christian

(57) **Abrégé**

Appui-tête (1) de siège de véhicule automobile, ledit appui-tête comprenant deux tiges (2) et une entretoise (4) présentant des parties latérales (5) saillant vers le bas, lesdites parties latérales s'emboitant dans les extrémités supérieures (6) desdites tiges, chacune desdites parties latérales présente deux harpons (8) diamétralement opposés de sorte que l'emboitement de ladite partie latérale dans l'extrémité supérieure (6) de ladite tige se fait avec rapprochement temporaire desdits harpons l'un de l'autre puis retour élastique dans leur position nominale permettant une insertion desdits crochets dans deux orifices (10) respectifs prévus dans ladite extrémité supérieure, ladite entretoise étant pourvue de deux éléments de blocage (13) s'insérant respectivement entre lesdits harpons de chacune desdites parties latérales, de manière à les bloquer dans leur position nominale et à empêcher le dégagement desdits crochets desdits orifices.

## Description

L'invention concerne un appui-tête de siège de véhicule automobile et un procédé d'assemblage d'un tel appui-tête.

Il est connu de réaliser un appui-tête de siège de véhicule automobile, ledit appui-tête comprenant :
- deux tiges métalliques tubulaires parallèles s'étendant verticalement destinées à être montées en haut de dossier dudit siège,
- un boitier d'absorption d'énergie en matériau plastique moulé, lesdites tiges étant montées dans ledit boitier de manière à pouvoir coulisser au moins verticalement, afin de permettre un réglage en hauteur dudit boitier,
- une entretoise en matériau plastique moulé s'étendant transversalement, ladite entretoise présentant des parties latérales saillant vers le bas, lesdites parties latérales s'emboitant dans les extrémités supérieures desdites tiges,

ledit boitier présentant un espace de logement de ladite entretoise, ledit logement s'étendant en hauteur pour permettre à ladite entretoise de coulisser dans ledit boitier lors de son réglage.

Le fait de prévoir deux tiges métalliques distinctes reliées entre elles par une entretoise est dicté notamment par des considérations de montage de l'appui-tête.

En effet, dans le cas où les tiges seraient issues d'un tube métallique replié en forme générale de U renversé, lesdites tiges étant formées par les branches du U, peut se poser le problème de leur montage quand elles présentent un ou plusieurs coudes.

L'agencement connu permet de résoudre ce problème, notamment en raison de la possibilité de monter les tiges par le bas du boitier ou par le bas d'un bloc de guidage lui-même monté dans ledit boitier.

Cependant, avec un tel agencement, on ne peut garantir un parfait blocage en translation et rotation axiales des tiges par rapport à l'entretoise.

Il en résulte, en cas de choc violent de la tête d'un occupant du siège sur l'appui-tête, un risque de déboitement des tiges de l'entretoise et également un risque de rotation axiale desdites tiges pouvant nuire au verrouillage du boitier dans sa position de réglage en hauteur, ce qui est dangereux pour ledit occupant.

L'invention a pour but de sécuriser l'accrochage des tiges sur l'entretoise afin d'assurer au passager une sécurité optimale.

A cet effet, et selon un premier aspect, l'invention propose un appui-tête de siège de véhicule automobile, ledit appui-tête comprenant :
- deux tiges métalliques tubulaires parallèles s'étendant verticalement destinées à être montées en haut de dossier dudit siège,
- un boitier d'absorption d'énergie en matériau plastique moulé, lesdites tiges étant montées dans ledit boitier de manière à pouvoir coulisser au moins verticalement, afin de permettre un réglage en hauteur dudit boitier,
- une entretoise en matériau plastique moulé s'étendant transversalement, ladite entretoise présentant des parties latérales saillant vers le bas, lesdites parties latérales s'emboitant dans les extrémités supérieures desdites tiges,
ledit boitier présentant un espace de logement de ladite entretoise, ledit logement s'étendant en hauteur pour permettre à ladite entretoise de coulisser dans ledit boitier lors de son réglage, ledit appui-tête présentant en outre les caractéristiques suivantes :
- chacune desdites parties latérales présente deux harpons diamétralement opposés, lesdits harpons étant élastiquement déformables de manière à pouvoir être rapprochés l'un de l'autre, les extrémités libres desdits harpons formant des crochets saillant radialement vers l'extérieur, le diamètre intérieur de la tige correspondante étant dimensionné de sorte que l'emboitement de ladite partie latérale dans l'extrémité supérieure de ladite tige se fait avec rapprochement temporaire desdits harpons l'un de l'autre puis retour élastique dans leur position nominale permettant une insertion desdits crochets dans deux orifices respectifs prévus dans ladite extrémité supérieure,
- ladite entretoise est pourvue de deux éléments de blocage s'insérant respectivement entre lesdits harpons de chacune desdites parties latérales, de manière à les bloquer dans leur position nominale et à empêcher le dégagement desdits crochets desdits orifices.

Dans cette description, les termes de positionnement dans l'espace (bas, haut, transversal, vertical, latéral, supérieur, ...) sont pris en référence au véhicule dans lequel est disposé l'appui-tête, ledit véhicule s'étendant longitudinalement selon sa longueur, transversalement selon sa largeur et verticalement selon sa hauteur.

Les termes relatifs à un repère circulaire (axial, diamétralement, radialement, ...) sont considérés relativement à l'axe général d'extension d'une tige.

Avec l'agencement proposé, on minimise le risque de déboitement des tiges de l'entretoise et également un risque de rotation axiale desdites tiges pouvant nuire au verrouillage du boitier dans sa position de réglage en hauteur, ce qui est favorable à la sécurité de l'occupant du siège.

Selon un deuxième aspect, l'invention propose un procédé d'assemblage d'un tel appui-tête.

D'autres particularités et avantages de l'invention apparaîtront dans la description qui suit, faite en référence à :
[Fig.1] qui est une représentation schématique partielle en coupe, selon un plan vertical transversal, d'un appui-tête selon une réalisation,
[Fig.2] qui est une représentation schématique partielle en perspective semi-éclatée d'un appui-tête selon une autre réalisation,
[Fig.3] est une vue agrandie de détail de la figure 2.

En référence aux figures, on décrit un appui-tête 1 de siège de véhicule automobile, ledit appui-tête comprenant :
- deux tiges 2 métalliques tubulaires parallèles s'étendant verticalement destinées à être montées en haut de dossier dudit siège,
- un boitier 3 d'absorption d'énergie en matériau plastique moulé, lesdites tiges étant montées dans ledit boitier de manière à pouvoir coulisser au moins verticalement, afin de permettre un réglage en hauteur dudit boitier,
- une entretoise 4 en matériau plastique moulé s'étendant transversalement, ladite entretoise présentant des parties latérales 5 saillant vers le bas, lesdites parties latérales s'emboitant dans les extrémités supérieures 6 desdites tiges,
ledit boitier présentant un espace 7 de logement de ladite entretoise, ledit logement s'étendant en hauteur pour permettre à ladite entretoise de coulisser dans ledit boitier lors de son réglage, ledit appui-tête présentant en outre les caractéristiques suivantes :
- chacune desdites parties latérales présente deux harpons 8 diamétralement opposés, lesdits harpons étant élastiquement déformables de manière à pouvoir être rapprochés l'un de l'autre, les extrémités libres desdits harpons formant des crochets 9 saillant radialement vers l'extérieur, le diamètre intérieur de la tige 2 correspondante étant dimensionné de sorte que l'emboitement de ladite partie latérale dans l'extrémité supérieure 6 de ladite tige se fait avec rapprochement temporaire desdits harpons l'un de l'autre puis retour élastique dans leur position nominale permettant une insertion desdits crochets dans deux orifices 10 respectifs prévus dans ladite extrémité supérieure,
- ladite entretoise est pourvue de deux éléments de blocage 13 s'insérant respectivement entre lesdits harpons de chacune desdites parties latérales, de manière à les bloquer dans leur position nominale et à empêcher le dégagement desdits crochets desdits orifices.

Selon une réalisation non représentée, le boitier 3 est garni d'un coussin.

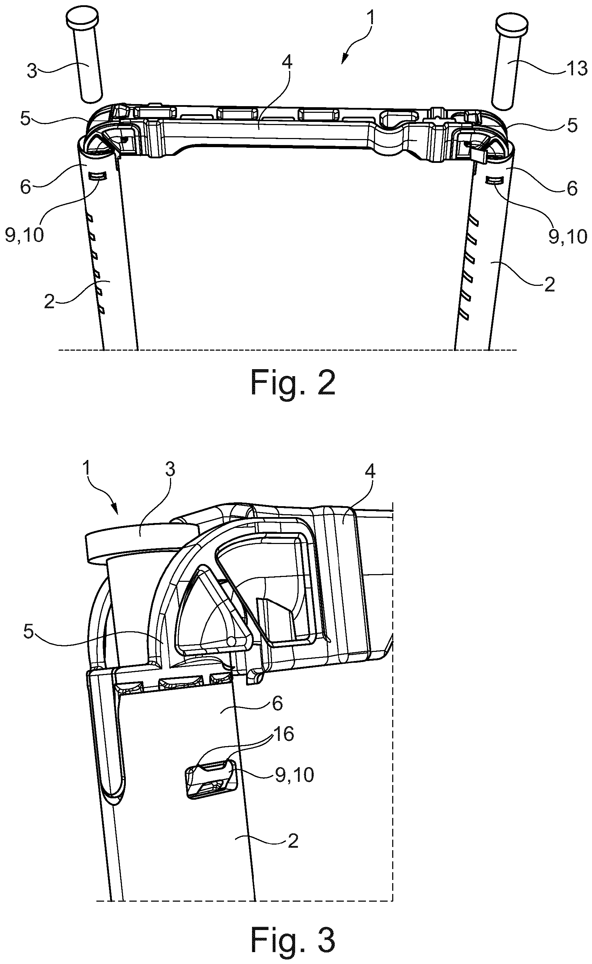

Selon la réalisation représentée en figure 2, les éléments de blocage 13 sont sous forme de chevilles métalliques ou en matériau plastique enfoncées en force, ou encore sous forme de vis.

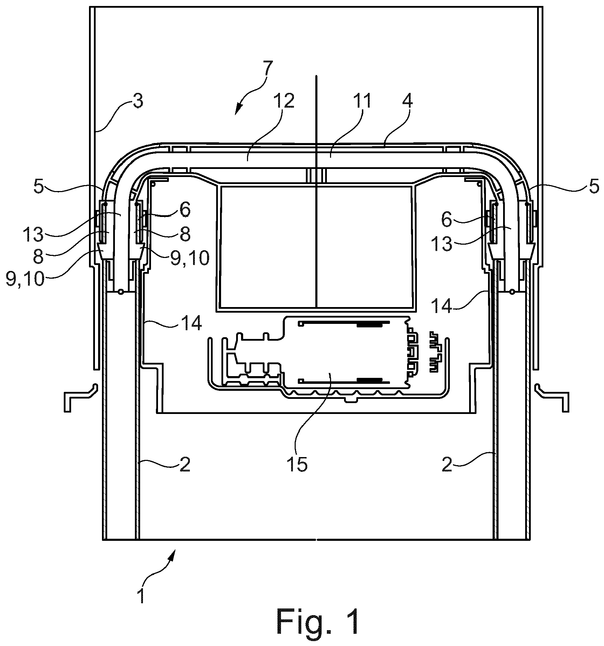

Selon la réalisation représentée en figure 1, l'entretoise 4 est pourvue d'un fil de renfort 11 métallique en forme générale de U renversé, la partie médiane 12 dudit fil s'emboîtant de façon bloquée sur ladite entretoise, les parties extrêmes dudit fil formant les éléments de blocage 13.

Une telle réalisation permet de renforcer par le fil 11 l'entretoise 4 en matériau plastique.

Selon la réalisation représentée en figure 1, l'appui-tête 1 comprend en outre, pour chacune des tiges 2, au moins un moyen de guidage 14 respectif permettant son coulissement vertical de façon ajustée, de manière à éviter les bruits de vibration.

Selon la réalisation représentée en figure 1, l'appui-tête 1 comprend en outre un dispositif motorisé d'actionnement du boitier 3 en réglage, ledit dispositif comprenant :
- un moteur 15 monté solidairement audit boitier, ledit moteur actionnant en rotation une vis sans fin s'étendant verticalement montée rotative sur ledit boitier,
- un écrou fixé à l'entretoise 4, ladite vis coopérant avec ledit écrou de manière à permettre le déplacement dudit boitier par mise en rotation de ladite vis.

Selon une variante non représentée, l'appui-tête 1 comprend en outre un dispositif de verrouillage manuel du boitier 3 par rapport aux tiges 2 selon une pluralité de positions verticales, de manière à verrouiller le réglage en hauteur choisi pour ledit boitier, ledit dispositif comprenant :
- au moins une tige 2 crantée pourvue de crans de réglage s'étageant axialement,
- une saillie de verrouillage montée mobile par rapport audit boitier entre une position de verrouillage, où ladite saillie s'insère dans un desdits crans, et une position de déverrouillage, où ladite saillie se retire dudit cran afin de libérer le coulissement de ladite tige crantée.

Selon une réalisation, les crochets 9 sont pourvus d'au moins une - en particulier deux selon la réalisation représentée - saillie 16 saillant vers le haut, ladite saillie étant déformable par écrasement de manière à s'écraser après l'introduction desdits crochets dans les orifices 10 correspondants et l'insertion des éléments de blocage 13, afin de bloquer verticalement lesdits crochets dans lesdits orifices.

On décrit à présent un procédé d'assemblage d'un tel appui-tête 1, ledit procédé comprenant les étapes suivantes :
- prévoir deux tiges 2 tubulaires métalliques,
- prévoir un boitier 3 en matériau plastique moulé,
- prévoir une entretoise 4 en matériau plastique moulé de liaison desdites tiges entre elles, ladite entretoise présentant des parties latérales 5 saillant vers le bas, lesdites parties latérales présentant deux harpons 8 diamétralement opposés, lesdits harpons étant élastiquement déformables de manière à pouvoir être rapprochés l'un de l'autre, les extrémités libres desdits harpons formant des crochets 9 saillant radialement vers l'extérieur,
- emboîter lesdites parties latérales dans les extrémités supérieures 6 desdites tiges, en rétractant radialement temporairement lesdits harpons vers l'intérieur, lesdits harpons retrouvant en fin de montage leur position nominale après emboîtement desdits crochets dans deux orifices 10 respectifs prévus dans chacune desdites extrémités supérieures,
- insérer deux éléments de blocage 13 entre chacun desdits harpons de chacune desdites parties latérales, de manière à bloquer lesdits harpons dans leur position nominale et à empêcher le dégagement desdits crochets desdits orifices.

Selon une modalité de ce procédé, l'étape d'emboitement des parties latérales 5 dans les extrémités supérieures 6 des tiges 2 est précédée par une étape de mise en place desdites tiges dans le boitier 3.

Selon une variante, l'étape d'insertion des éléments de blocage 13 est suivie par une étape de mise en place des tiges 2 dans le boitier 3.

## Revendications

1. Appui-tête (1) de siège de véhicule automobile, ledit appui-tête comprenant :
• deux tiges (2) métalliques tubulaires parallèles s'étendant verticalement destinées à être montées en haut de dossier dudit siège,
• un boitier (3) d'absorption d'énergie en matériau plastique moulé, lesdites tiges étant montées dans ledit boitier de manière à pouvoir coulisser verticalement, afin de permettre un réglage en hauteur dudit boitier,
• une entretoise (4) en matériau plastique moulé s'étendant transversalement, ladite entretoise présentant des parties latérales (5) saillant vers le bas, lesdites parties latérales s'emboitant dans les extrémités supérieures (6) desdites tiges,
ledit boitier présentant un espace (7) de logement de ladite entretoise, ledit logement s'étendant en hauteur pour permettre à ladite entretoise de coulisser dans ledit boitier lors de son réglage, ledit appui-tête étant **caractérisé en ce que** :
• chacune desdites parties latérales présente deux harpons (8) diamétralement opposés, lesdits harpons étant élastiquement déformables de manière à pouvoir être rapprochés l'un de l'autre, les extrémités libres desdits harpons formant des crochets (9) saillant radialement vers l'extérieur, le diamètre intérieur de la tige (2) correspondante étant dimensionné de sorte que l'emboitement de ladite partie latérale dans l'extrémité supérieure (6) de ladite tige se fait avec rapprochement temporaire desdits harpons l'un de l'autre puis retour élastique dans leur position nominale permettant une insertion desdits crochets dans deux orifices (10) respectifs prévus dans ladite extrémité supérieure,
• ladite entretoise est pourvue de deux éléments de blocage (13) s'insérant respectivement entre lesdits harpons de chacune desdites parties latérales, de manière à les bloquer dans leur position nominale et à empêcher le dégagement desdits crochets desdits orifices.

2. Appui-tête (1) selon la revendication 1, **caractérisé en ce que** l'entretoise (4) est pourvue d'un fil de renfort (11) métallique en forme générale de U renversé, la partie médiane (12) dudit fil s'emboîtant de façon bloquée sur ladite entretoise, les parties extrêmes dudit fil formant les éléments de blocage (13).

3. Appui-tête (1) selon l'une quelconque des revendications précédentes, **caractérisé en ce qu'**il comprend en outre, pour chacune des tiges (2), au moins un moyen de guidage (14) respectif permettant son coulissement vertical de façon ajustée.

4. Appui-tête (1) selon l'une des revendications 1 à 3, **caractérisé en ce qu'**il comprend en outre un dispositif motorisé d'actionnement du boitier (3) en réglage, ledit dispositif comprenant :
• un moteur (15) monté solidairement audit boitier, ledit moteur actionnant en rotation une vis sans fin s'étendant verticalement montée rotative sur ledit boitier,
• un écrou fixé à l'entretoise (4), ladite vis coopérant avec ledit écrou de manière à permettre le déplacement dudit boitier par mise en rotation de ladite vis.

5. Appui-tête (1) selon l'une des revendications 1 à 3, **caractérisé en ce qu'**il comprend en outre un dispositif de verrouillage manuel du boitier (3) par rapport aux tiges (2) selon une pluralité de positions verticales, de manière à verrouiller le réglage en hauteur choisi pour ledit boitier, ledit dispositif comprenant :
• au moins une tige (2) crantée pourvue de crans de réglage s'étageant axialement,
• une saillie de verrouillage montée mobile par rapport audit boitier entre une position de verrouillage, où ladite saillie s'insère dans un desdits crans, et une position de déverrouillage, où ladite saillie se retire dudit cran afin de libérer le coulissement de ladite tige crantée.

6. Appui-tête (1) selon l'une quelconque des revendications précédentes, **caractérisé en ce que** les crochets (9) sont pourvus d'au moins une saillie (16) saillant vers le haut, ladite saillie étant déformable par écrasement de manière à s'écraser après l'introduction desdits crochets dans les orifices (10) correspondants et l'insertion des éléments de blocage (13), afin de bloquer verticalement lesdits crochets dans lesdits orifices.

7. Procédé d'assemblage d'un appui-tête (1) selon l'une quelconque des revendications précédentes, ledit procédé comprenant les étapes suivantes :
• prévoir deux tiges (2) tubulaires métalliques,
• prévoir un boitier (3) en matériau plastique moulé,
• prévoir une entretoise (4) en matériau plastique moulé de liaison desdites tiges entre elles, ladite entretoise présentant des parties latérales (5) saillant vers le bas, lesdites parties latérales présentant deux harpons (8) diamétralement opposés, lesdits harpons étant élastiquement déformables de manière à pouvoir être rapprochés l'un de l'autre, les extrémités libres desdits harpons formant des crochets (9) saillant radialement vers l'extérieur,
• emboîter lesdites parties latérales dans les extrémités supérieures (6) desdites tiges, en rétractant radialement temporairement lesdits harpons vers l'intérieur, lesdits harpons retrouvant en fin de montage leur position nominale après emboîtement desdits crochets dans deux orifices (10) respectifs prévus dans chacune desdites extrémités supérieures,
• insérer deux éléments de blocage (13) entre chacun desdits harpons de chacune desdites parties latérales, de manière à bloquer lesdits harpons dans leur position nominale et à empêcher le dégagement desdits crochets desdits orifices.

8. Procédé selon la revendication 7, **caractérisé en ce que** l'étape d'emboîtement des parties latérales (5) dans les extrémités supérieures (6) des tiges (2) est précédée par une étape de mise en place desdites tiges dans le boitier (3).

9. Procédé selon la revendication 7, **caractérisé en ce que** l'étape d'insertion des éléments de blocage (13) est suivie par une étape de mise en place des tiges (2) dans le boitier (3).
